# NEUE EUROPÄISCHE PATENTSCHRIFT

(11) **EP 3 146 228 B2**
(45) Veröffentlichungstag und Bekanntmachung des Hinweises auf die Entscheidung über den Einspruch: **17.01.2024**
(45) Hinweis auf die Patenterteilung: 13.09.2017
(21) Anmeldenummer: 15723909.6
(22) Anmeldetag: 18.05.2015
(51) Int. Cl.: F16D 51/00

(54) **TRÄGEREINHEIT**
BRAKE SUPPORT
SUPPORT DE FREIN

(30) Priorität: 20.05.2014 DE 102014209502
(43) Veröffentlichungstag der Anmeldung: 29.03.2017
(73) Patentinhaber: SAF-HOLLAND GmbH, 63856 Bessenbach (DE)
(72) Erfinder: DREWES, Olaf, 63743 Aschaffenburg (DE); MARSCHNER, Oliver, 63808 Haibach (DE)
(74) Vertreter: Müller Schupfner & Partner Patent- und Rechtsanwaltspartnerschaft mbB
(86) Internationale Anmeldenummer: PCT/EP2015/060850
(87) Internationale Veröffentlichungsnummer: WO 2015/177073

(56) Entgegenhaltungen:
- WO-A1-2013/087737
- WO-A1-2013/087737
- DE-A1- 2 550 855
- DE-A1-102011 088 847
- US-A- 3 322 241
- US-A- 4 621 713
- US-A- 5 613 577
- Auszug aus Wikipedia : "Fahrwerk "
- Prüfungsbescheid des DPMA vom 18 Januar 2019

## Beschreibung

Die vorliegende Erfindung betrifft eine Trägereinheit zum Einsatz in Bremssystemen von Kraftfahrzeugen, bevorzugt von Nutzfahrzeugen.

Trägereinheiten sind aus dem Stand der Technik insofern bekannt, als dass meist gegossene Bremsträger vorgesehen sind, an welchen die verschiedenen Baugruppen der Fahrzeugbremse festlegbar und über den Bremsträger mit beispielsweise der Achse verbunden sind. Die aus dem Stand der Technik bekannten Bremsträger weisen dabei im Allgemeinen den Nachteil auf, dass sie schwer gebaut sind und aufgrund einer Vielzahl von zu montierenden Bauteilen einen hohen Montageaufwand erfordern. Insbesondere im Bereich der Spreizkeiltrommelbremsen ist es bisher erforderlich, an einem Bremsträger eine Spreizkeileinheit durch Verschweißung oder Verschraubung festzulegen und weitere Adapterelemente für die Anbringung des Bremszylinders vorzusehen. Diese zusätzlichen Adapterelemente erhöhen zum einen den Bauraumbedarf und schaffen zum anderen auch eine Vielzahl anfälliger Verbindungsstellen, durch welche beispielsweise Schmutz und Flüssigkeiten in den Innenbereich der Spreizkeileinheit gelangen können. Es besteht daher ein signifikanter Verbesserungsbedarf hinsichtlich der Kompaktheit, der Fehleranfälligkeit, sowie der Montage eines Bremssystems.

Die WO 2013/087737 A1 zeigt einen Bremsträger einer Trommelbremse mit einer Trägereinheit, welche einen ersten Anschlussabschnitt aufweist, an welchem ein Bremszylinder festlegbar ist und einen zweiten Anschlussabschnitt aufweist, an welchem eine Wandlereinheit festlegbar ist.

Die US-5,613,577 A zeigt eine Scheibenbremse eines Fahrzeugs, welche hydraulisch betätigbar ist. DE 25 50 855 A1 und WO 2013/087731 A1 zeigen Bremsvorrichtungen von Trommelbremsen, bei denen eine Spreizkeileinheit über einen Bremsträger an einem Fahrwerk befestigt ist.

Aufgabe der vorliegenden Erfindung ist es, eine Trägereinheit bereitzustellen, welche sowohl die Montage des Bremssystems vereinfacht als auch Gewicht und Bauraum einspart sowie die Fehleranfälligkeit des Bremssystems verringert.

Diese Aufgabe wird gelöst mit einer Trägereinheit gemäß einem der Ansprüche 1, 2 oder 3. Weitere Vorteile und Merkmale der vorliegenden Erfindung ergeben sich aus den abhängigen Ansprüchen.

Erfindungsgemäß umfasst die Trägereinheit einen ersten Flanschabschnitt, einen zweiten Flanschabschnitt und einen Führungsabschnitt, wobei der erste Flanschabschnitt eine erste Eingriffsgeometrie zur Festlegung der Trägereinheit an einem Fahrwerk aufweist, wobei der zweite Flanschabschnitt eine zweite Eingriffsgeometrie zur Festlegung eines Bremszylinders aufweist, wobei der Führungsabschnitt benachbart zum zweiten Flanschabschnitt angeordnet ist und eine Führungsgeometrie zur Führung eines Führungselements entlang einer Führungsachse aufweist, wobei eine Spreizkeileinheit benachbart zum Führungsabschnitt vorgesehen ist und wobei die Spreizkeileinheit ein Gehäuse aufweist, das einstückig mit dem Führungsabschnitt ausgebildet ist. Ein wesentliches Merkmal der Trägereinheit ist, dass eine Spreizkeileinheit integral mit der Trägereinheit ausgebildet ist, wobei insbesondere das Gehäuse der Spreizkeileinheit einstückig mit dem entsprechend benachbarten Abschnitt der Trägereinheit ausgebildet ist. Benachbart zum Gehäuse der Trägereinheit ist dabei der Führungsabschnitt der Trägereinheit vorgesehen. Der Führungsabschnitt ist ein zumindest bereichsweise hohlkörperförmig ausgebildeter Abschnitt der Trägereinheit, in welchem ein Führungselement entlang einer Führungsachse verlagerbar angeordnet ist. Das Führungselement dient dabei insbesondere bevorzugt der Kraftübertragung einer Bremskraft, welche von einem an dem zweiten Flanschabschnitt angeflanschten Bremszylinder hin zu einer entsprechenden Spreizkeilmechanik, welche in der Spreizkeileinheit angeordnet ist, führt. Der Führungsabschnitt hat weiterhin die Funktion, sowohl die Geometrie der Spreizkeileinheit als auch das Führungselement sowie den Bremszylinder gegen das Eindringen von Schmutz, Fremdkörpern und Flüssigkeiten abzuschirmen. Indem das Gehäuse der Spreizkeileinheit einstückig mit dem Führungsabschnitt ausgebildet ist, kann vorteilhafterweise eine weitere Schnittstelle zwischen der Spreizkeileinheit und der Trägereinheit vermieden werden, durch welche im normalen Betrieb der Trägereinheit Schmutz und Flüssigkeiten gelangen könnten. Der erste Flanschabschnitt weist eine erste Eingriffsgeometrie zur Festlegung der Trägereinheit an einem Fahrwerk auf, wobei die erste Eingriffsgeometrie vorzugsweise eine standardisierte Eingriffsgeometrie ist, welche an Fahrwerken verschiedener Nutzfahrzeuge oder Nutzfahrzeugtypen standardmäßig in Eingriff bringbar ist. Insbesondere bevorzugt ist die zweite Eingriffsgeometrie des zweiten Flanschabschnitts ebenfalls eine standardisierte Schnittstelle zur Festlegung eines Bremszylinders, welche insbesondere durch vorzugsweise zwei Eingriffsgeometrien gekennzeichnet ist, die in einem bestimmten, standardisierten Abstand zueinander vorgesehen sind. Mit Vorteil kann die Trägereinheit daher in bereits vorhandene Bremssysteme integriert werden, wobei der zuvor verwendete Bremszylinder weiter angewendet werden kann.

In einer bevorzugten Ausführungsform ist der zweite Flanschabschnitt einstückig mit dem Führungsabschnitt ausgebildet. Mit anderen Worten ist der zweite Flanschabschnitt dabei vorzugsweise als einstückiges Gussteil gemeinsam mit dem Führungsabschnitt ausgebildet, wobei mit Vorteil eine nachträgliche Montage des zweiten Flanschabschnitts am Führungsabschnitt vermieden werden kann und gleichzeitig Wand- beziehungsweise Querschnittsgeometrien verwendet werden können, welche eine besonders gute Kraftübertragung bei gleichzeitig geringer Wandstärke erlauben. Durch die einstückige Ausbildung des zweiten Flanschabschnitts und des Führungsabschnitts kann dabei das Gewicht der Trägereinheit verringert und der Montageaufwand zum Anbringen eines Bremszylinders an der Trägereinheit deutlich verringert werden da ein Monteur nur ein Bauteil handhaben muss.

Gemäß einem ersten erfindungsgemäßen Aspekt weist die Trägereinheit einen Halteabschnitt auf, welcher an den ersten Flanschabschnitt und den Führungsabschnitt grenzt und sich im Wesentlichen entlang einer Halteachse erstreckt, wobei der erste Flanschabschnitt, der Halteabschnitt und der Führungsabschnitt einstückig miteinander ausgebildet sind. Der Halteabschnitt dient vorzugsweise der Positionierung des Führungsabschnitts und damit auch des einstückig mit dem Führungsabschnitt verbundenen ersten Flanschabschnitts sowie der einstückig mit dem Führungsabschnitt verbundenen Spreizkeileinheit relativ zum Fahrwerk. Dabei weist der Halteabschnitt eine Erstreckung längs einer Halteachse auf, wobei die Erstreckung des Halteabschnitts längs der Halteachse, beziehungsweise parallel zur Halteachse vorzugsweise seine größte Erstreckung ist. Mit Vorteil sind im Übergangsbereich zwischen dem Halteabschnitt und dem ersten Flanschabschnitt kraftflussoptimierte Außengeometrien des Halteabschnitts vorgesehen, das heißt vorzugsweise gerundete Außengeometrien, an denen mit Vorteil nur geringe Kerbwirkung bei Biegebeanspruchung des ersten Flanschabschnitts und des Halteabschnitts auftritt. Mittels solcher kraftflussoptimierter Geometrien können die erforderlichen Wandstärken verringert, das Gewicht reduziert und dennoch die benötigten Kräfte und Momente übertragen werden.

In einer weiterhin bevorzugten Ausführungsform steht die Halteachse quer, vorzugsweise senkrecht zur Führungsachse. Mit der Anordnung des Halteabschnitts mit der daraus resultierenden Richtung, entlang derer die Halteachse verläuft, ist eine genaue Positionierung der Kraftübertragungsrichtung vom Bremszylinder zur Spreizkeileinheit definiert. Die senkrechte Ausrichtung des Halteabschnitts mit seiner Halteachse und des Führungsabschnitts mit der Führungsachse zueinander sorgt insbesondere bevorzugt für eine gleichmäßige Kraftübertragung bei Biegebeanspruchung, welche durch den relativ schweren Bremszylinder auf die Trägereinheit übertragen werden oder welche durch Schwingungen beispielsweise der Bremsbacken auf die Spreizkeileinheit übertragen werden.

Gemäß dem ersten erfindungsgemäßen Aspekt erstreckt sich die erste Eingriffsgeometrie im Wesentlichen längs einer Eingriffsachse, wobei die Halteachse um einen Winkel zur Eingriffsachse verschwenkt ist und wobei der Winkel kleiner 90° ist. Weiterhin bevorzugt ist es, dass die Eingriffsachse, entlang derer sich die Eingriffsgeometrie erstreckt beziehungsweise entlang derer die Eingriffsgeometrie vorteilhafterweise in Eingriff mit dem Fahrwerk eines Nutzfahrzeuges gebracht werden kann, im Wesentlichen parallel zu einer Axialrichtung des Fahrwerkes, beispielsweise parallel zu der Rotationsrichtung der Fahrzeugräder angeordnet ist. Der Begriff "im Wesentlichen" bedeutet im Rahmen der vorliegenden Erfindung, dass kleinere Abweichungen, beispielsweise verursacht durch Fertigungstoleranzen im Rahmen der vorliegenden Erfindung als parallel gewertet werden. Mit Vorteil ist die Trägereinheit längs der Eingriffsachse, welche mit Vorteil parallel zur Axialrichtung verläuft, an dem Fahrwerk des Nutzfahrzeuges festgelegt, wobei insbesondere bevorzugt eine gute Erreichbarkeit der entsprechenden Befestigungsmittel längs der Eingriffsachse gegeben ist. Weiterhin ist die Halteachse um einen Winkel zur Eingriffsachse verschwenkt, wobei dieser Winkel kleiner als 90° ist. Besonders bevorzugt wird der Winkel dabei auf der Seite der Trägereinheit gemessen, auf der sich die Spreizkeileinheit befindet. Durch eine Anordnung der Halteachse schräg relativ zur Eingriffsachse ist es möglich, den oberen Teil der Trägereinheit, das heißt den aus Spreizkeileinheit, Führungsabschnitt und zweitem Flanschabschnitt bestehenden Bereich in das Innere einer Bremstrommel hineinragen zu lassen, um dort die Spreizkeileinheit in Eingriff mit den jeweils vorgesehenen Bremsbacken bringen zu können. Außerdem wird durch die schräge Anordnung der Halteachse auch der Bremszylinder in ausreichender Entfernung zur Achse des Nutzfahrzeuges angeordnet, sodass bei Schwingungen im Fahrwerksystem keine Beschädigung durch Schwingungen und auftretendem Kontakt zwischen dem Bremszylinder und angrenzenden Geometrien des Fahrwerks auftreten. Für den Fall, dass sich im dreidimensionalen Raum die Eingriffsachse und die Halteachse nicht schneiden, so ist es bevorzugt, dass der Winkel zwischen Eingriffsachse und Halteachse als Winkel zwischen den Projektionen der Eingriffsachse und der Halteachse auf eine, vorzugsweise durch den Führungsabschnitt verlaufende Schnittebene bestimmt ist.

In einer bevorzugten Ausführungsform liegt der Winkel im Bereich von 45° bis 89°, vorzugsweise im Bereich von 60° bis 85° und besonders bevorzugt bei etwa 70° bis 85°. Der relativ weit gewählte Bereich von 45° bis 89° ist dabei bevorzugt für Trägereinheiten, welche zum Festlegen besonders vieler verschiedener Bremszylinder ausgelegt sind. Es hat sich gezeigt, dass in diesem Bereich von 45° bis 89° alle derzeit auf dem Markt vorhandenen Bremszylinder ohne Weiteres in ein Bremssystem mit einer erfindungsgemäßen Trägereinheit integriert werden können, ohne dass Beschädigungen durch Anschlagen an benachbarte Fahrwerksgeometrien befürchtet werden müssen. Der besonders bevorzugte Bereich von 60° bis 85° hat sich als vorteilhaft erwiesen, da auf diese Weise eine besonders kompakte Bauweise der Trägereinheit erreicht wird, wobei einerseits ein ausreichender Abstand eines an dem zweiten Flanschabschnitt festgelegten Bremszylinders von den benachbarten Fahrwerksgeometrien gewährleistet ist und andererseits die Erstreckung des Halteabschnitts relativ gering gewählt werden kann und auf diese Weise Gewicht einsparbar ist. Der insbesondere bevorzugte Bereich von 70° bis 85° hat sich als vorteilhaft zum Einsatz mit Spreizkeilbremseinheiten herausgestellt, da hier eine optimale Anordnung des oberen Bereiches der Trägereinheit relativ zur ersten Eingriffsgeometrie beziehungsweise relativ zum ersten Flanschabschnitt erreichbar ist, um einerseits unter Gewichtseinsparung, andererseits mit einer möglichst einfachen Montage eine Trägereinheit in das Bremssystem eines Nutzfahrzeuges zu integrieren.

Mit Vorteil ist die erste Eingriffsgeometrie mittelbar und/oder unmittelbar in formschlüssigem Eingriff mit einem korrespondierenden Abschnitt des Fahrwerks bringbar. Ein mittelbarer formschlüssiger Eingriff wird dabei besonders bevorzugt durch einen Bolzen oder eine Schraubverbindung hergestellt. Ein unmittelbarer formschlüssiger Eingriff kann dabei vorzugsweise durch einen Vorsprung am ersten Flanschabschnitt beziehungsweise der ersten Eingriffsgeometrie hergestellt sein, welche in eine entsprechende Rücksprungsgeometrie an dem korrespondierenden Abschnitt des Fahrwerks formschlüssig eingreift, um beispielsweise die Trägereinheit relativ zum Fahrwerk gegen Verdrehung um die Eingriffsachse zu sichern. Eine formschlüssige Anbindung der Trägereinheit an das Fahrwerk ist bevorzugt, um erstens eine Demontierbarkeit der Trägereinheit vom Fahrwerk zu gewährleisten und andererseits die bei einer bis dato üblichen Schweißverbindung des Bremsträgers an der Fahrwerksachse auftretenden Thermospannungen und Gefügebeschädigungen vermeiden zu können.

Gemäß einem zweiten erfindungsgemäßen Aspekt ist ein Sicherungselement vorgesehen, welches entlang der Eingriffsachse in formschlüssigen Eingriff mit der ersten Eingriffsgeometrie bringbar ist, wobei das Sicherungselement von der Seite der Trägereinheit zugänglich ist, auf der sich die Spreizkeileinheit befindet. Das Sicherungselement ist vorzugsweise eine Schraube oder ein Gewindebolzen und ist mit Vorteil von der Seite der Trägereinheit zugänglich, auf welcher sich die Spreizkeileinheit befindet. Mit anderen Worten ist das Sicherungselement vorzugsweise von der Außenseite des Fahrwerks zugänglich, das heißt, nachdem das Rad und die Bremstrommel der Bremseinheit vom Fahrwerk demontiert wurden, kann die Trägereinheit durch Lösen des Sicherungselements von außen in einfacher Weise demontiert werden. In einer alternativ bevorzugten Ausführungsform kann das Sicherungselement auch als Mutter ausgebildet sein, welche mit einer beispielsweise als Gewindestab ausgebildeten ersten Eingriffsgeometrie in Eingriff bringbar ist.

Zusätzlich kann ein weiteres Sicherungselement von der Seite der Trägereinheit zugänglich sein, auf welcher sich der zweite Flanschabschnitt befindet. Insbesondere, wenn es bevorzugt ist, dass die Trägereinheit auch ohne vorherige Demontage des Rades, beziehungsweise der Bremstrommel des Bremssystems, von diesem demontiert oder an ein solches anmontiert werden kann, ist es bevorzugt, das Sicherungselement an der Seite der Trägereinheit anzuordnen, an der sich der zweite Flanschabschnitt befindet. Mit anderen Worten ist das Sicherungselement also vorzugsweise von der Innenseite des Fahrwerks aus erreichbar, wobei der erste Flanschabschnitt und die erste Eingriffsgeometrie vorteilhafterweise derart von dem Achskörper und anderen Baugruppen des Fahrwerks entfernt angeordnet sind, dass genügend Platz für den Einsatz eines Momentschlüssels oder eines druckluftbetriebenen Schraubgeräts vorhanden ist.

Besonders bevorzugt ist die erste Eingriffsgeometrie als Gewindebohrung ausgebildet. Mit dieser bevorzugten Ausführungsform wird die Montage der Trägereinheit am Fahrwerk eines Nutzfahrzeuges vereinfacht, da lediglich eine Schraube mit einer Eingriffsgeometrie in Eingriff gebracht werden muss, um die Trägereinheit am Fahrwerk festzulegen. Insbesondere entfallen zusätzlich vorgesehene Muttern oder andere Fixierelemente. Mit Vorteil ist als Gewindeart für die erste Eingriffsgeometrie ein selbstsicherndes ISO-Gewinde vorgesehen.

Alternativ bevorzugt ist die erste Eingriffsgeometrie als Gewindebolzen ausgebildet und vorzugsweise einstückig mit dem ersten Flanschabschnitt ausgeführt. Auch mit dieser alternativ vorgesehenen Ausführungsform der ersten Eingriffsgeometrie kann die benötigte Anzahl der für die Montage der Trägereinheit erforderlichen Einzelteile verringert werden und somit nicht nur Gewicht, sondern auch Montagezeit eingespart werden.

Gemäß einem dritten erfindungsgemäßen Aspekt weist der erste Flanschabschnitt zwei Eingriffsgeometrien auf, welche voneinander beabstandet angeordnet sind, wobei die Eingriffsachsen der jeweiligen Eingriffsgeometrien parallel zueinander verlaufen. Insbesondere, um eine Verschwenkung der Trägereinheit um eine mit Vorteil parallel zu der Eingriffsachse verlaufenden Axialrichtung des Fahrwerkes zu verhindern, sind zumindest zwei erste Eingriffsgeometrien vorgesehen. Um den Montageaufwand gering zu halten, ist es weiterhin bevorzugt, nicht mehr als vier erste Eingriffsgeometrien am ersten Flanschabschnitt vorzusehen, welche jeweils einzeln mit dem Fahrwerk des Nutzfahrzeuges in Eingriff bringbar sind. Dabei ist der Abstand der Eingriffsgeometrien voneinander vorzugsweise kleiner als die Erstreckung des Halteabschnitts längs der Halteachse. Durch diese bevorzugte Dimensionierung des Abstandes der ersten Eingriffsgeometrien relativ zur Erstreckung des einen oder der zumindest zwei vorgesehenen Halteabschnitte ist ein günstiger Kompromiss zwischen dem durch das zusätzliche Material anfallenden Gewicht und einer gleichzeitig ausreichend hohen Sicherung der Trägereinheit gegen Verdrehung relativ zum Fahrwerk gegeben.

Mit Vorteil sind zwei Halteabschnitte vorgesehen, welche durch einen Freiraum voneinander getrennt sind, wobei die mittlere Querschnittsfläche der Halteabschnitte in einem Verhältnis von 0,2 bis 1,3, vorzugsweise von 0,3 bis 0,9 und besonders bevorzugt von ca. 0,5 bis 0,8 zur mittleren Querschnittsfläche des Freiraums steht. Als mittlere Querschnittsfläche der Halteabschnitte wird dabei bevorzugt die Summe der Querschnittsflächen der einzelnen Halteabschnitte in einem Querschnitt durch die Trägereinheit gewählt, in welchem die durchschnittliche Querschnittsdicke beziehungsweise -breite des Halteabschnitts im Verlauf längs der Eingriffsachse der benachbart zum Halteabschnitt befindlichen Eingriffsgeometrie vorliegt. Die Querschnittsfläche des Freiraumes wird vorzugsweise in derselben Schnittebene durch die Trägereinheit wie die Querschnittsfläche der Halteabschnitte bestimmt. Das Verhältnis der beiden Querschnittsflächen zueinander ist dabei ein Ausdruck dafür, wie "massiv" die Halteabschnitte ausgeführt sind. Je kleiner das Verhältnis der Querschnittsfläche der Halteabschnitte relativ zum Querschnitt des Freiraumes ist, desto dünnwandiger beziehungsweise schmaler sind die Halteabschnitte ausgeführt, wobei das Gewicht deutlich reduziert ist. Insbesondere, wenn die Trägereinheit eine relativ kompakte Bauweise aufweisen soll, wenig Bauraum beanspruchen und einen geringen Abstand der Halteabschnitte voneinander aufweisen soll, ist der Freiraum im Vergleich zu den Halteabschnitten relativ klein, sodass das Verhältnis bis zu 1,3 ansteigen kann. Als günstiger Kompromiss zwischen einer leichtgewichtigen Bauweise und einer andererseits ausreichend hohen Festigkeit der Halteabschnitte der Trägereinheit hat sich ein Bereich von ca. 0,5 bis 0,8 herausgestellt, wobei in diesem Verhältnisbereich die besten Ergebnisse im Rahmen der vorliegenden Erfindung erzielt werden konnten.

In einer besonders bevorzugten Ausführungsform ist das Gehäuse der Spreizkeileinheit aus Sphäroguss hergestellt. Die Ausbildung aus Sphäroguss erlaubt dabei zum einen eine präzise Ausgestaltung der entsprechenden Außen- beziehungsweise Innengeometrien der Spreizkeileinheit und zum anderen eine günstige Anbindung durch beispielsweise Angießen des Gehäuses der Spreizkeileinheit an den entsprechenden Führungsabschnitt der Trägereinheit, welches aus einem günstigeren, vergleichsweise weniger festen Material hergestellt sein kann als Sphäroguss. Insbesondere bevorzugt ist dabei die gesamte Trägereinheit gemeinsam mit dem Gehäuse der Spreizkeileinheit als ein Sphärogussbauteil ausgeführt.

Mit Vorteil weist die Trägereinheit nicht mehr als vier erste Eingriffsgeometrien, vorzugsweise nicht mehr als zwei erste Eingriffsgeometrien auf. Durch die bevorzugte Reduzierung der Anzahl erster Eingriffsgeometrien wird der Montageaufwand verringert. Gleichzeitig hat es sich aber gezeigt, dass bei erhöhtem Festigkeitsbedarf drei bis vier erste Eingriffsgeometrien gerechtfertigt sind, obwohl der Montageaufwand steigt.

Weitere Vorteile und Merkmale der vorliegenden Erfindung ergeben sich aus der nachfolgenden Beschreibung mit Bezug auf die beigefügten Figuren. Es versteht sich, dass einzelne, in den jeweiligen Ausführungsformen beschriebene Merkmale auch in anderen Ausführungsformen Anwendung finden können, sofern dies nicht explizit ausgeschlossen ist oder sich aus technischen Gründen verbietet. Es zeigen:
- Fig. 1: eine schematische Schnittansicht einer ersten bevorzugten Ausführungsform der erfindungsgemäßen Trägereinheit,
- Fig. 2: eine zweite Schnittansicht einer bevorzugten Ausführungsform der erfindungsgemäßen Trägereinheit, und
- Fig. 3: eine teilweise geschnittene Ansicht einer bevorzugten Ausführungsform der erfindungsgemäßen Trägereinheit.

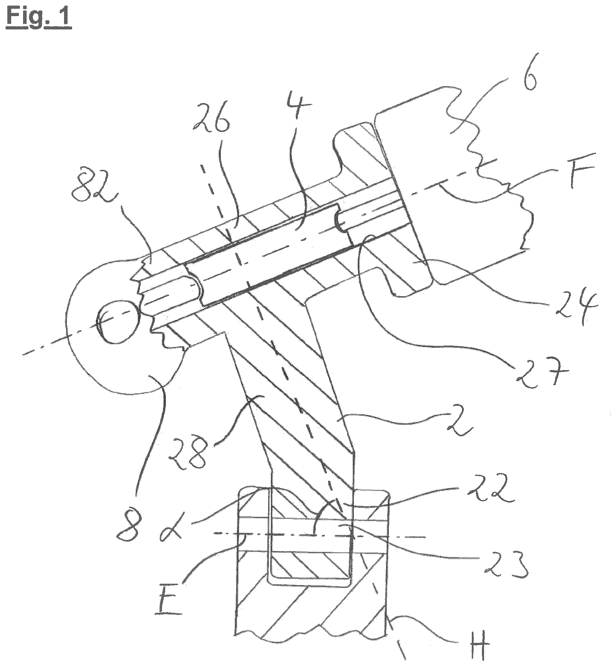

Bei der in Fig. 1 dargestellten schematisch vereinfachten Schnittansicht einer bevorzugten Ausführungsform der erfindungsgemäßen Trägereinheit 2 ist die Spreizkeileinheit 8 mit ihrem Gehäuse 82 nur teilweise geschnitten und ansonsten sehr stark vereinfacht dargestellt. Angrenzend an das Gehäuse 82 der Spreizkeileinheit 8 weist die Trägereinheit einen Führungsabschnitt 26 auf, in welchem ein Führungselement 4 längs der Führungsachse F verlagerbar angeordnet und geführt ist. Der Führungsabschnitt 26 weist dabei insbesondere eine Führungsgeometrie 27 auf, welche besonders bevorzugt als zylindrischer Hohlraum in dem Führungsabschnitt 26 ausgebildet ist und das Führungselement 4 gegen Verlagerung quer zur Führungsachse F sichert und ein Gleiten des Führungselements 4 erleichtert. Der Spreizkeileinheit 8 gegenüberliegend weist die Trägereinheit 2 einen zweiten Flanschabschnitt 24 auf, an welchem ein Bremszylinder 6 festlegbar, beziehungsweise bevorzugt festgelegt ist. Das Gehäuse 82 der Spreizkeileinheit 8, der Führungsabschnitt 26 und der zweite Flanschabschnitt 24 sind dabei einstückig mit einem Halteabschnitt 28 ausgebildet, wobei sich der Halteabschnitt im Wesentlichen längs einer Halteachse H erstreckt. Der Halteabschnitt 28 dient der Positionierung des oberen Teils der Trägereinheit 2 relativ zu einem im unteren Bereich des Bildes dargestellten Fahrwerk des Nutzfahrzeuges. Um die Trägereinheit 2 am Fahrwerk des Nutzfahrzeuges festzulegen, weist die Trägereinheit einen ersten Flanschabschnitt 22 auf, welcher über eine erste Eingriffsgeometrie 23 mittelbar und/oder unmittelbar an dem Fahrwerk des Nutzfahrzeuges festlegbar ist. Bei der Fig. 1 dargestellten bevorzugten Ausführungsform ist beispielsweise ein korrespondierender Abschnitt des Fahrwerks, welcher gabelförmig ausgebildet. In diesen Abschnitt des Fahrwerkes ist der erste Flanschabschnitt 22 der Trägereinheit 2 einsetzbar und anschließend über die als Durchgangsbohrung ausgebildete erste Eingriffsgeometrie 23 mit einer Schraube 10 sicherbar ist. Mit Vorteil erstreckt sich dabei die erste Eingriffsgeometrie 23 im Wesentlichen längs einer Eingriffsachse E, wobei die Eingriffsachse E vorteilhafterweise parallel zu einer Axialrichtung des Nutzfahrzeuges ausgerichtet ist, um die Trägereinheit 2 längs dieser Axialrichtung am Nutzfahrzeug festlegen zu können. Besonders bevorzugt ist der Querschnitt der ersten Eingriffsgeometrie 23 im Verlauf längs der Eingriffsachse E im Wesentlichen konstant, wobei kleinere Abweichungen, wie beispielsweise bei einem Gewinde vorliegend, als im Wesentlichen konstant gelten sollen. Weiterhin ist die Halteachse H um einen Winkel α zur Eingriffsachse E verschwenkt, wodurch der obere Bereich der Trägereinheit 2 und insbesondere bevorzugt die Spreizkeileinheit 8 nach in der Figur links relativ zum ersten Flanschabschnitt 22 versetzt angeordnet sind. Vorzugsweise ist im linken Bereich der in Fig. 1 dargestellten Trägereinheit 2 die Anordnung der Bremsbacken und der umgebenden Bremstrommel (beides nicht dargestellt) vorgesehen. Durch die Schrägstellung der Halteachse H relativ zur Eingriffsachse E wird weiterhin der auf der rechten Seite der Figur angeordnete Bremszylinder 6 nach in der Figur oben verschwenkt und somit weiter von der Eingriffsachse E beabstandet. Die Verschwenkung der Halteachse H relativ zur Eingriffsachse E sorgt somit für eine optimale Platzierung der Trägereinheit 2 innerhalb eines Bremssystems in Bezug auf die benachbarten Komponenten des Fahrwerks.

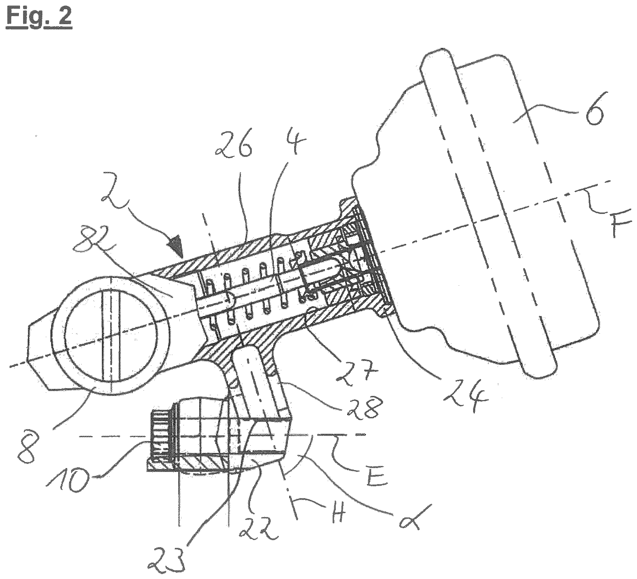

Fig. 2 zeigt eine weitere Schnittansicht einer bevorzugten Ausführungsform der erfindungsgemäßen Trägereinheit 2, wobei im Unterschied zu der in Fig. 1 gezeigten Ausführungsform die Trägereinheit 2 zwei Halteabschnitte 28 aufweist, welche jeweils im Wesentlichen parallel zueinander zwischen dem Führungsabschnitt 26 und dem ersten Flanschabschnitt 22 der Trägereinheit vorgesehen sind. Indem die Trägereinheit 2 teilweise nicht massiv, sondern als Hohlkörper oder stegartig ausgebildet wird, kann bei gleichzeitig hohen, durch die stegartig ausgebildeten Halteabschnitte 28 der Trägereinheit 2 aufzunehmenden Biegemomente das Gewicht der Trägereinheit 2 deutlich reduziert werden. Bei der in Fig. 2 gezeigten Ausführungsform ist der erste Eingriffsabschnitt 23 als Gewindebohrung ausgeführt, in welche ein Sicherungselement 10 von der Seite der Trägereinheit 2 aus erreichbar ist, auf der sich die Spreizkeileinheit 8 befindet. Mit anderen Worten ist bei der in Fig. 2 dargestellten Ausführungsform das Sicherungselement 10 dann erreichbar, wenn die vorzugsweise im linken Teil von Fig. 2 angeordnete Bremstrommel (nicht gezeigt) von dem Bremssystem demontiert wurde. Mit Vorteil weist der zweite Flanschabschnitt 24 eine Erstreckung parallel zur Führungsachse F von ca. bis zu 30 mm, besonders bevorzugt von 14 - 16 mm auf, wobei für die im Rahmen der vorliegenden Erfindung getesteten Bereiche die erforderliche Festigkeit erreicht und gleichzeitig der Gewichtsanteil des zweiten Flanschabschnitts 24 gering gehalten werden konnte.

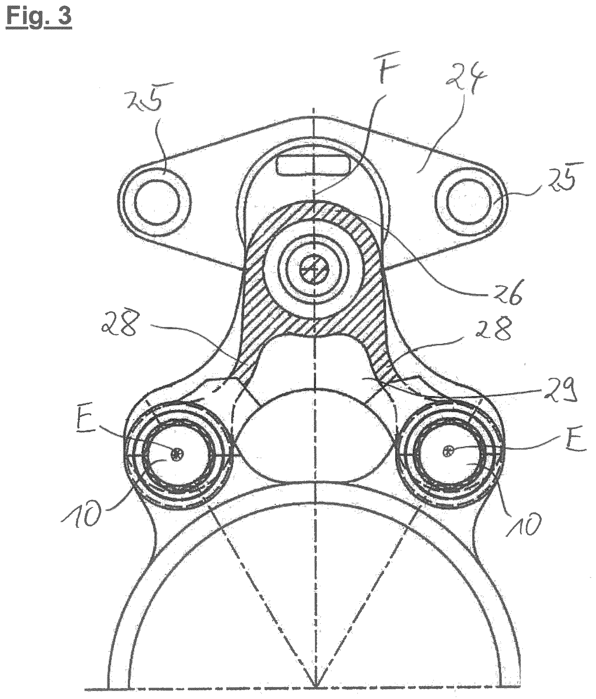

Fig. 3 zeigt eine Schnittansicht der bereits in Fig. 2 dargestellten bevorzugten Ausführungsform der Trägereinheit 2, wobei in Fig. 3 die Schnittebene quer zur Eingriffsachse E verläuft. Dabei wird aus Fig. 3 ersichtlich, dass die Trägereinheit 2 nicht nur längs der Eingriffsebene E versetzt zumindest einen, vorzugsweise zwei Halteabschnitte 28 aufweist, sondern auch quer zur Eingriffsrichtung E versetzt zueinander jeweils vorzugsweise zwei Halteabschnitte 28 vorgesehen sind. Für die in den Fig. 2 und 3 dargestellte bevorzugte Ausführungsform ergeben sich somit mindestens zwei, vorzugsweise vier einzelne Halteabschnitte 28, die zueinander beabstandet sind. Weiterhin ist dargestellt, dass die Trägereinheit 2 zwei erste Flanschabschnitte 22 aufweist, die voneinander beabstandet sind und an jeweils einer dafür vorgesehenen korrespondierenden Geometrie des Fahrwerks des Nutzfahrzeuges festlegbar sind. Darüber hinaus ist die zylindrische Gestalt der Führungsgeometrie 27 des Führungsabschnitts 26 erkennbar, in welcher das Führungselement 4 verschiebbar angeordnet ist. Die Anbindung der Halteabschnitte 28 an den Führungsabschnitt 26 sowie den jeweiligen ersten Flanschabschnitt 22 ist dabei durch gerundete Außengeometrien gekennzeichnet, welche einen besonders günstigen Kraftfluss erlauben und Kerbwirkungen vermeiden. In Fig. 3 ist darüber hinaus der zweite Flanschabschnitt 24 erkennbar, welcher vorzugsweise zwei voneinander beabstandete zweite Eingriffsgeometrien aufweist, welche mit Vorteil als Durchgangslöcher ausgebildet sind, durch welche ein entsprechender Bolzen hindurchsteckbar ist und auf diese Weise ein Bremszylinder mit zwei Befestigungspunkten an dem zweiten Flanschabschnitt 24 festlegbar ist. Mit Vorteil weisen die beiden zweiten Eingriffsgeometrien 25 einen Abstand voneinander auf der in einem Verhältnis von 0,9 - 1,1, vorzugsweise 0,95 - 1,05 zum Abstand zwischen den beiden ersten Eingriffsgeometrien 23 steht. Besonders bevorzugt ist der Abstand der beiden zweiten Eingriffsgeometrien 25 im Wesentlichen gleich dem Abstand der ersten Eingriffsgeometrien 23 zueinander.

### Bezugszeichenliste:

2 - Trägereinheit
4 - Führungselement
6 - Bremszylinder
8 - Spreizkeileinheit
10 - Sicherungselement
22 - erster Flanschabschnitt
23 - erste Eingriffsgeometrie
24 - zweiter Flanschabschnitt
25 - zweite Eingriffsgeometrie
26 - Führungsabschnitt
27 - Führungsgeometrie
28 - Halteabschnitt
29 - Freiraum
82 - Gehäuse
α - Winkel
E - Eingriffsachse
F - Führungsachse
H - Halteabschnitt

## Patentansprüche

1. Trägereinheit (2) umfassend einen ersten Flanschabschnitt (22), einen zweiten Flanschabschnitt (24) und einen Führungsabschnitt (26),
wobei der erste Flanschabschnitt (22) eine erste Eingriffsgeometrie (23) zur Festlegung der Trägereinheit (2) an einem Fahrwerk aufweist,
wobei der zweite Flanschabschnitt (24) eine zweite Eingriffsgeometrie (25) zur Festlegung eines Bremszylinders (6) aufweist,
wobei der Führungsabschnitt (26) benachbart zum zweiten Flanschabschnitt (24) angeordnet ist und eine Führungsgeometrie (27) zur Führung eines Führungselements (4) entlang einer Führungsachse (F) aufweist,
wobei eine Spreizkeileinheit (8) benachbart zum Führungsabschnitt (26) vorgesehen ist,
**dadurch gekennzeichnet, dass** die Spreizkeileinheit (8) ein Gehäuse (82) aufweist, dass einstückig mit dem Führungsabschnitt (26) ausgebildet ist, wobei die Trägereinheit (2) einen Halteabschnitt (28) aufweist, welcher an den ersten Flanschabschnitt (22) und den Führungsabschnitt (26) grenzt und sich im Wesentlichen entlang einer Halteachse (H) erstreckt,
wobei der erste Flanschabschnitt (22), der Halteabschnitt (28) und der Führungsabschnitt (24) einstückig miteinander ausgebildet sind,
wobei die erste Eingriffsgeometrie (23) sich im Wesentlichen längs einer Eingriffsachse (E) erstreckt,
wobei die Halteachse (H) um einen Winkel (α) zur Eingriffsachse (E) verschwenkt ist, wobei der Winkel (α) kleiner als 90° ist.

2. Trägereinheit (2) umfassend einen ersten Flanschabschnitt (22), einen zweiten Flanschabschnitt (24) und einen Führungsabschnitt (26),
wobei der erste Flanschabschnitt (22) eine erste Eingriffsgeometrie (23) zur Festlegung der Trägereinheit (2) an einem Fahrwerk aufweist,
wobei der zweite Flanschabschnitt (24) eine zweite Eingriffsgeometrie (25) zur Festlegung eines Bremszylinders (6) aufweist,
wobei der Führungsabschnitt (26) benachbart zum zweiten Flanschabschnitt (24) angeordnet ist und eine Führungsgeometrie (27) zur Führung eines Führungselements (4) entlang einer Führungsachse (F) aufweist,
wobei eine Spreizkeileinheit (8) benachbart zum Führungsabschnitt (26) vorgesehen ist,
**dadurch gekennzeichnet, dass** die Spreizkeileinheit (8) ein Gehäuse (82) aufweist, dass einstückig mit dem Führungsabschnitt (26) ausgebildet ist, wobei ein Sicherungselement (10) vorgesehen ist, welches entlang der Eingriffsachse (E) in formschlüssigen Eingriff mit der ersten Eingriffsgeometrie bringbar ist,
wobei das Sicherungselement (10) von der Seite der Trägereinheit (2) zugänglich ist, auf der sich die Spreizkeileinheit (8) befindet.

3. Trägereinheit (2) umfassend einen ersten Flanschabschnitt (22), einen zweiten Flanschabschnitt (24) und einen Führungsabschnitt (26),
wobei der erste Flanschabschnitt (22) eine erste Eingriffsgeometrie (23) zur Festlegung der Trägereinheit (2) an einem Fahrwerk aufweist,
wobei der zweite Flanschabschnitt (24) eine zweite Eingriffsgeometrie (25) zur Festlegung eines Bremszylinders (6) aufweist,
wobei der Führungsabschnitt (26) benachbart zum zweiten Flanschabschnitt (24) angeordnet ist und eine Führungsgeometrie (27) zur Führung eines Führungselements (4) entlang einer Führungsachse (F) aufweist,
wobei eine Spreizkeileinheit (8) benachbart zum Führungsabschnitt (26) vorgesehen ist,
**dadurch gekennzeichnet, dass** die Spreizkeileinheit (8) ein Gehäuse (82) aufweist, dass einstückig mit dem Führungsabschnitt (26) ausgebildet ist, wobei der erste Flanschabschnitt (22) zwei Eingriffsgeometrien (23) aufweist, welche voneinander beabstandet angeordnet sind,
wobei die Eingriffsachsen (E) der Eingriffsgeometrien (23) parallel zueinander verlaufen.

4. Trägereinheit (2) nach einem der vorhergehenden Ansprüche,
wobei der zweite Flanschabschnitt (24) einstückig mit dem Führungsabschnitt (26) ausgebildet ist.

5. Trägereinheit (2) nach einem der Ansprüche 2, 3 oder 4,
aufweisend einen Halteabschnitt (28), welcher an den ersten Flanschabschnitt (22) und den Führungsabschnitt (26) grenzt und sich im Wesentlichen entlang einer Halteachse (H) erstreckt,
wobei der erste Flanschabschnitt (22), der Halteabschnitt (28) und der Führungsabschnitt (24) einstückig miteinander ausgebildet sind.

6. Trägereinheit (2) nach Anspruch 5,
wobei die Halteachse (H) quer zur Führungsachse (F) steht.

7. Trägereinheit (2) nach Anspruch 53 oder 6,
wobei die erste Eingriffsgeometrie (23) sich im Wesentlichen längs einer Eingriffsachse (E) erstreckt,
wobei die Halteachse (H) um einen Winkel (α) zur Eingriffsachse (E) verschwenkt ist, wobei der Winkel (α) kleiner als 90° ist.

8. Trägereinheit (2) nach Anspruch 7,
wobei der Winkel (α) im Bereich von 45° bis 89°, vorzugsweise im Bereich von 60° bis 85° und besonders bevorzugt bei etwa 70° bis 85° liegt.

9. Trägereinheit nach einem der Ansprüche 1, 3 oder 4 - 8,
wobei ein Sicherungselement (10) vorgesehen ist, welches entlang der Eingriffsachse (E) in formschlüssigen Eingriff mit der ersten Eingriffsgeometrie bringbar ist,
wobei das Sicherungselement (10) von der Seite der Trägereinheit (2) zugänglich ist, auf der sich die Spreizkeileinheit (8) befindet.

10. Trägereinheit (2) nach einem der Ansprüche 1, 2 oder 4 - 9,
wobei der erste Flanschabschnitt (22) zwei Eingriffsgeometrien (23) aufweist, welche voneinander beabstandet angeordnet sind,
wobei die Eingriffsachsen (E) der Eingriffsgeometrien (23) parallel zueinander verlaufen.

11. Trägereinheit (2) nach Anspruch 10,
wobei zwei Halteabschnitte (28) vorgesehen sind, welche durch einen Freiraum (29) voneinander getrennt sind,
wobei die mittlere Querschnittsfläche der Halteabschnitte (28) in einem Verhältnis von 0,2 bis 1,3, vorzugsweise von 0,3 bis 0,9 und besonders bevorzugt von ca. 0,5 bis 0,8 zur mittleren Querschnittsfläche des Freiraums (29) steht.

12. Trägereinheit (2) nach einem der vorhergehenden Ansprüche, aufweisend nicht mehr als vier erste Eingriffsgeometrien (23), vorzugsweise nicht mehr als zwei erste Eingriffsgeometrien (23).

## Claims

1. Carrier unit (2) comprising a first flange section (22), a second flange section (24) and a guide section (26),
wherein the first flange section (22) has a first engagement geometry (23) for fixing the carrier unit (2) to a chassis,
wherein the second flange section (24) has a second engagement geometry (25) for fixing a brake cylinder (6),
wherein the guide section (26) is arranged adjacent to the second flange section (24) and has a guide geometry (27) for guiding a guide element (4) along a guide axis (F),
wherein an expanding wedge unit (8) is provided adjacent to the guide section (26),
**characterized in that** the expanding wedge unit (8) has a housing (82) which is formed integrally with the guide section (26),
wherein the carrier unit (2) has a holding section (28) which adjoins the first flange section (22) and the guide section (26) and extends substantially along a holding axis (H),
wherein the first flange section (22), the holding section (28) and the guide section (24) are formed integrally with one another,
wherein the first engagement geometry (23) extends substantially along an engagement axis (E),
wherein the holding axis (H) is pivoted by an angle (α) to the engagement axis (E), wherein the angle (α) is less than 90°.

2. Carrier unit (2) comprising a first flange section (22), a second flange section (24) and a guide section (26),
wherein the first flange section (22) has a first engagement geometry (23) for fixing the carrier unit (2) to a chassis
wherein the second flange section (24) has a second engagement geometry (25) for fixing a brake cylinder (6),
wherein the guide section (26) is arranged adjacent to the second flange section (24) and has a guide geometry (27) for guiding a guide element (4) along a guide axis (F),
wherein an expanding wedge unit (8) is provided adjacent to the guide section (26),
**characterized in that** the expanding wedge unit (8) has a housing (82) which is formed integrally with the guide section (26),
wherein a securing element (10) is provided, which can be brought into positive engagement with the first engagement geometry along the engagement axis (E),
wherein the securing element (10) is accessible from the side of the carrier unit (2) on which the expanding wedge unit (8) is located.

3. Carrier unit (2) comprising a first flange section (22), a second flange section (24) and a guide section (26),
wherein the first flange section (22) has a first engagement geometry (23) for fixing the carrier unit (2) to a chassis,
wherein the second flange section (24) has a second engagement geometry (25) for fixing a brake cylinder (6),
wherein the guide section (26) is arranged adjacent to the second flange section (24) and has a guide geometry (27) for guiding a guide element (4) along a guide axis (F),
wherein an expanding wedge unit (8) is provided adjacent to the guide section (26),
**characterized in that** the expanding wedge unit (8) has a housing (82) which is formed integrally with the guide section (26),
wherein the first flange section (22) has two engagement geometries (23) which are arranged spaced apart from each other,
wherein the engagement axes (E) of the engagement geometries (23) run parallel to one another.

4. Carrier unit (2) according to one of the preceding claims,
wherein the second flange section (24) is formed integrally with the guide section (26).

5. Carrier unit (2) according to one of claims 2, 3 or 4,
comprising a holding section (28) which adjoins the first flange section (22) and the guide section (26) and extends substantially along a holding axis (H), wherein the first flange section (22), the holding section (28) and the guide section (24) are formed integrally with each other.

6. Carrier unit (2) according to claim 5,
wherein the holding axis (H) is transverse to the guide axis (F).

7. Carrier unit (2) according to claim 5 or 6,
wherein the first engagement geometry (23) extends substantially along an engagement axis (E),
wherein the holding axis (H) is pivoted by an angle (α) to the engagement axis (E), wherein the angle (α) is less than 90°.

8. Carrier unit (2) according to claim 7,
wherein the angle (α) is in the range from 45° to 89°, preferably in the range from 60° to 85° and particularly preferably at about 70° to 85°.

9. Carrier unit according to one of claims 1, 3 or 4 - 8,
wherein a securing element (10) is provided, which can be brought into positive engagement with the first engagement geometry along the engagement axis (E),
wherein the securing element (10) is accessible from the side of the carrier unit (2) on which the expanding wedge unit (8) is located.

10. Carrier unit (2) according to one of claims 1, 2 or 4 - 9,
wherein the first flange section (22) comprises two engagement geometries (23) which are arranged spaced apart from each other,
wherein the engagement axes (E) of the engagement geometries (23) run parallel to each other.

11. Carrier unit (2) according to claim 10,
wherein two holding sections (28) are provided, which are separated from one another by a free space (29),
wherein the mean cross-sectional area of the holding sections (28) is in a ratio of 0.2 to 1.3, preferably of 0.3 to 0.9 and particularly preferably of approximately 0.5 to 0.8 to the mean cross-sectional area of the free space (29).

12. Carrier unit (2) according to one of the preceding claims,
comprising not more than four first engagement geometries (23), preferably not more than two first engagement geometries (23).

## Revendications

1. Unité de support (2) comportant une première portion de bride (22), une seconde portion de bride (24) et une portion de guidage (26),
dans laquelle
la première portion de bride (22) présente une première géométrie d'engagement (23) pour immobiliser l'unité de support (2) sur un train de roulement,
la seconde portion de bride (24) présente une seconde géométrie d'engagement (25) pour immobiliser un cylindre de frein (6),
la portion de guidage (26) est agencée au voisinage de la seconde portion de bride (24) et présente une géométrie de guidage (27) pour guider un élément de guidage (4) le long d'un axe de guidage (F),
un ensemble à coin d'écartement (8) est prévu au voisinage de la portion de guidage (26),
**caractérisée en ce que**
l'ensemble à coin d'écartement (8) présente un boîtier (82) qui est réalisé d'un seul tenant avec la portion de guidage (26),
l'unité de support (2) comprend une portion de retenue (28) qui est adjacente à la première portion de bride (22) et à la portion de guidage (26) et qui s'étend sensiblement le long d'un axe de retenue (H),
la première portion de bride (22), la portion de retenue (28) et la portion de guidage (24) sont réalisées d'un seul tenant les unes avec les autres,
la première géométrie d'engagement (23) s'étend sensiblement le long d'un axe d'engagement (E),
l'axe de retenue (H) est pivoté d'un angle (α) par rapport à l'axe d'engagement (E), l'angle (α) étant inférieur à 90°.

2. Unité de support (2) comportant une première portion de bride (22), une seconde portion de bride (24) et une portion de guidage (26),
dans laquelle
la première portion de bride (22) présente une première géométrie d'engagement (23) pour immobiliser l'unité de support (2) sur un train de roulement,
la seconde portion de bride (24) présente une seconde géométrie d'engagement (25) pour immobiliser un cylindre de frein (6),
la portion de guidage (26) est agencée au voisinage de la seconde portion de bride (24) et présente une géométrie de guidage (27) pour guider un élément de guidage (4) le long d'un axe de guidage (F),
un ensemble à coin d'écartement (8) est prévu au voisinage de la portion de guidage (26),
**caractérisée en ce que**
l'ensemble à coin d'écartement (8) présente un boîtier (82) qui est réalisé d'un seul tenant avec la portion de guidage (26),
il est prévu un élément de blocage (10) qui peut être amené en engagement par coopération de formes avec la première géométrie d'engagement le long de l'axe d'engagement (E),
l'élément de blocage (10) est accessible depuis le côté de l'unité de support (2) sur lequel se situe l'ensemble à coin d'écartement (8).

3. Unité de support (2) comportant une première portion de bride (22), une seconde portion de bride (24) et une portion de guidage (26),
dans laquelle
la première portion de bride (22) présente une première géométrie d'engagement (23) pour immobiliser l'unité de support (2) sur un train de roulement,
la seconde portion de bride (24) présente une seconde géométrie d'engagement (25) pour immobiliser un cylindre de frein (6),
la portion de guidage (26) est agencée au voisinage de la seconde portion de bride (24) et présente une géométrie de guidage (27) pour guider un élément de guidage (4) le long d'un axe de guidage (F),
un ensemble à coin d'écartement (8) est prévu au voisinage de la portion de guidage (26),
**caractérisée en ce que**
l'ensemble à coin d'écartement (8) présente un boîtier (82) qui est réalisé d'un seul tenant avec la portion de guidage (26),
la première portion de bride (22) présente deux géométries d'engagement (23) qui sont agencées à distance l'une de l'autre,
les axes d'engagement (E) des géométries d'engagement (23) s'étendent parallèlement l'un à l'autre.

4. Unité de support (2) selon l'une des revendications précédentes,
dans laquelle la seconde portion de bride (24) est réalisée d'un seul tenant avec la portion de guidage (26).

5. Unité de support (2) selon l'une des revendications 2, 3 ou 4,
comprenant une portion de retenue (28) qui est adjacente à la première portion de bride (22) et à la portion de guidage (26) et qui s'étend sensiblement le long d'un axe de retenue (H),
la première portion de bride (22), la portion de retenue (28) et la portion de guidage (24) sont réalisées d'un seul tenant les unes avec les autres.

6. Unité de support (2) selon la revendication 5,
dans laquelle l'axe de retenue (H) est transversal par rapport à l'axe de guidage (F).

7. Unité de support (2) selon la revendication 5 ou 6,
dans laquelle la première géométrie d'engagement (23) s'étend sensiblement le long d'un axe d'engagement (E),
l'axe de retenue (H) est pivoté d'un angle (α) par rapport à l'axe d'engagement (E), l'angle (α) étant inférieur à 90°.

8. Unité de support (2) selon la revendication 7,
dans laquelle l'angle (α) est dans la plage de 45° à 89°, de préférence dans la plage de 60° à 85° et de manière particulièrement préférée d'environ 70° à 85°.

9. Unité de support selon l'une des revendications 1, 3 ou 4 à 8,
dans laquelle
il est prévu un élément de blocage (10) qui peut être amené en engagement par coopération de formes avec la première géométrie d'engagement le long de l'axe d'engagement (E),
l'élément de blocage (10) est accessible depuis le côté de l'unité de support (2) sur lequel se situe l'ensemble à coin d'écartement (8).

10. Unité de support (2) selon l'une des revendications 1, 2 ou 4 à 9,
dans laquelle
la première portion de bride (22) présente deux géométries d'engagement (23) qui sont agencées à distance l'une de l'autre,
les axes d'engagement (E) des géométries d'engagement (23) s'étendent parallèlement l'un à l'autre.

11. Unité de support (2) selon la revendication 10,
dans laquelle
il est prévu deux portions de retenue (28) qui sont séparées l'une de l'autre par un espace libre (29),
la surface de section transversale moyenne des portions de retenue (28) est dans une relation de 0,2 à 1,3, de préférence de 0,3 à 0,9 et de manière particulièrement préférée d'environ 0,5 à 0,8 par rapport à la surface de section transversale moyenne de l'espace libre (29).

12. Unité de support (2) selon l'une des revendications précédentes, comprenant pas plus de quatre premières géométries d'engagement (23), de préférence pas plus de deux premières géométries d'engagement (23).
